# EUROPEAN PATENT APPLICATION

(11) **EP 1 676 877 A1**
(43) Date of publication of application: **05.07.2006**
(21) Application number: 04447295.9
(22) Date of filing: 28.12.2004
(51) Int. Cl.: C08K 5/3492, C08K 5/00, C08J 3/22

(54) **Flame resistant polyamide and/or polyester composition, and process for manufacture thereof**

(71) Applicant: Campine N.V., 2340 Beerse (BE)
(72) Inventor: Dittmann, Benjamin, 2500 Lier (BE); Cuypers, Bart, 2460 Kasterlee (BE)
(74) Representative: Brouwer, Hendrik Rogier

(57) **Abstract**

Process for manufacturing a flame retarding masterbatch comprising a polyamide (PA) and/or polyester resin and a melamine cyanurate (MeCy), which process comprises the steps of feeding at least a polyamide and/or polyester resin and a melamine cyanurate to a suitable continuous kneading and extruding apparatus, melt-kneading the masterbatch components in the apparatus, and granulating the melt-kneaded masterbatch material, wherein feeding of the components to the apparatus is performed by at least a first inlet and a second inlet, positioned downstream from the first, whereby from 0-100 pbw of the total mass of PA and from 0-100 pbw of the total mass of MeCy are fed to the apparatus through the first top inlet, the remaining being fed to the apparatus through the second top inlet.

## Description

The present invention relates to a process for manufacturing a flame retardant masterbatch comprising a polyamide and/or polyester resin, and a melamine cyanurate, as described in the preamble of claim 1. The present invention also relates to flame resistant polyamide and/or polyester resin compositions comprising said masterbatch and having flame retardancy, as well as excellent mechanical properties, in particular impact strength and surface appearance.

Flame-retardants for polyamide and/or polyester resin compositions are already known. Thus, for example, red phosphorus or halogen-containing flame retardants have been employed on an industrial scale to provide flame retardany polyamide or polyester resin compositions. However, these flame retardants have decisive disadvantages, since, for example, in the event of a fire the halogen-containing flame retardants release toxic and corrosive compounds, such as hydrogen halides, especially during prolonged fires, and red phosphorus forms phosphine during processing and furthermore leads to end products which have an intense red to dark brown intrinsic colour.

Suitable halogen-free flame-retardants for polyamide or polyester resin compositions, such as melamine phosphate or melamine cyanurate, have also been proposed. These additives in turn have the disadvantage that they are difficult to disperse into the polymer matrix. Flame retardant polyamide or polyester resin compositions compounded with a melamine cyanurate however have the definite advantage that they do not generate toxic components on thermal decomposition. Many efforts over the past decades have therefore been undertaken to provide effective flame retardant polyamide or polyester resin compositions on the basis of melamine cyanurate.

The problem with melamine cyanurate as flame retardant additive is generally related to the amount needed to obtain any suitable flame retardancy. The minimum amount of melamine cyanurate needed for improving flame resistance of a resin composition is in general at least 5-10% by weight with respect to the total weight of the composition. Hereby, obviously, the level of flame resistance obtained increases with the amount of melamine cyanurate added.

However, when compounded with a polyamide and/or polyester resin in a large amount, the dispersibility of the melamine cyanurate particles in the resin is affected to an increasingly large extent, which results in inferior mechanical properties of the resin composition, as compared to the composition without such flame retardant. In addition, agglomeration of the melamine cyanurate particles with increasing content causes surface defects such as visible white or lightly coloured spots.

A method has been proposed to improve the state of dispersion of the melamine cyanurate particles in the polyamide resin, in which the melamine cyanurate is provided with a surface coat before compounding it with the resin (Japanese Patent Laid Open H6157820). However, this method is costly and the coated melamine cyanurate particles tend to bloom out to the surface of the shaped article.

It has also been proposed in WO96/28499 to premix the polyamide resin and a relatively high amount of melamine cyanurate, thus forming a masterbatch, and to compound this masterbatch with polyamide resin to obtain a flame retarding polyamide or polyester resin composition. Although many details are not given with respect to the compounding method used in preparing the masterbatch, it is clear from the disclosure of WO96/28499 that in preparing the masterbatch, the melamine cyanurate is separately fed to the extruder, containing the polyamide melt. Although WO96/28499 claims to be able to achieve melamine cyanurate contents in the masterbatch of between 10 - 60% by weight, all examples provided in WO96/28499 show that a melamine content of between 30 to 32% by weight is the highest amount achievable with the method of WO96/28499. On page 4, line 35 of WO96/28499 it is further mentioned that high contents of melamine cyanurate in the masterbatch cause manufacturing problems in preparing the masterbatch as well as in preparing the polyamide, based on it. Typical manufacturing problems includedifficulty in dispersion and the occurrence of strand breakage during manufacturing.

In view of the above, it is an objective of the present invention to provide a process for manufacturing a flame retardant masterbatch comprising a polyamide or polyester resin and an elevated melamine cyanurate content, which masterbatch, when compounded with a polyamide or polyester resin in suitable amounts, yields a flame retardant polyamide or polyester resin composition having improved mechanical properties, in particular impact strength at break, and an improved surface appearance.

With elevated melamine cyanurate content in the masterbatch is meant a content of at least 40% by weight, preferably at least 50% by weight, most preferably at least 60% by weight.

This and other aims are achieved by a process with the technical characteristics of claim 1.

According to the invention, the process for obtaining a masterbatch of a polyamide and/or polyester resin and a melamine cyanurate component comprises the steps of feeding at least a polyamide and/or polyester resin and a melamine cyanurate to a suitable continuous kneading and extruding apparatus, melt-kneading the masterbatch components in the apparatus, and granulating the melt-kneaded masterbatch material, and is characterised in that feeding of the components to the apparatus is performed by at least a first inlet and a second inlet, positioned downstream from the first, whereby from 0-100 pbw of the total mass of polyamide (PA) and/or polyester resin, and from 0-100 pbw of the total mass of melamine cyanurate (MeCy) is fed to the apparatus through the first inlet, the remaining being fed to the apparatus through the second inlet.

By adding the components to the continuous kneading and extruding apparatus in the indicated manner, i.e. by always feeding through at least two inlets, with the proviso that at least some of the PA and/or the polyester is fed to the apparatus together with the melamine cyanurate through the second inlet, a remarkably improved dispersion of the melamine cyanurate particles in the polyamide and/or polyester resin matrix is achieved. This also means that for the first time it has become possible to achieve a melamine cyanurate content in the masterbatch of up to 40-60% by weight and more, with respect to the total mass of the masterbatch, without having an adverse effect on the mechanical and surface appearance properties of the products containing the masterbatch.

An additional advantage of the process and masterbatch according to the invention is that a much more reproducible flame-retardant behaviour is obtained.

According to the invention, polyamide or polyester resins suitable for use in the process for making the masterbatch and/or the polyamide or polyester resin composition include polymers obtained by polycondensing diamines, such as hexamethylene diamine and a dicarboxylic acid. These polyamides are obtained, for example, by polymerization of a lactam or an amino acid or by polycondensation of a diamine and a dicarboxylic acid. Examples of suitable polyamides are, for example, those which are obtained by polymerization of ε-caprolactam, aminocaproic acid, 7-aminoheptanoic acid, 11-aminoundecanoic acid, 9-aminononanoic acid and α-pyrrolidone or α-piperidone, or polymers which are obtained by polycondensation of a diamine, such as, for example, hexamethylenediamine, nonamethylenediamine, undecamethylenediamine, dodecamethylenediamine and m-xylylenediamine, with a dicarboxylic acid, such as terephthalic acid, isophthalic acid, adipic acid, sebacic acid, a dibasic dodecanoic acid and glutaric acid, or by copolymerization thereof. These are, for example, poly-ε-caprolactam (nylon 6), polyhexamethyleneadipic acid amide (nylon 6/6), polyhexamethyleneazelaic acid amide (nylon 6/9), polyhexamethylenesebacic acid(nylon 6/10), polyhexamethylenedodecanedioic acid amide (nylon 6/12), polypyrrolidone (nylon 4), polycaprylolactam (nylon 8), poly(w-aminoundecanoic acid) (nylon 11), poly(ω-dodecanelactam) (nylon 12) and copolyamides and terpolyamides thereof, such as, for example, nylon 6/66, nylon 6/12, nylon 6/6T, where T is terephthalic acid, nylon 66/BAC 6, where BAC is 1,3- or 1,4-bis-aminocyclohexane, nylon 6/66/12 and nylon 6/610/PACM10, where PACM is 4,4'-diaminodicyclohexylmethane.

Preferred polyamides are nylon 6, nylon 6/6, nylon 6/10, nylon 6/12, nylon 11 and nylon 12. Nylon 6 and nylon 6/6 are particularly preferred. Suitable polyamides for preparing the masterbatch according to the invention have a relative viscosity in sulphuric acid according to ISO 307 of between 2,0 - 5,0, preferably between 2,0 - 3,0, more preferably between 2,2 - 2,4.

Suitable polyester resins to be used in the masterbatch and/or resin composition according to the invention include all amorphous and/or crystalline polyesters of diols and/or diphenols, and an organic acid, such as those build from at least one aromatic and/or aliphatic carboxylic diacid with 8-14 carbon atoms, and at least one diol. Particularly suitable polyesters are polyalkylene terephtalates, in particular polyethylene terephtalate (PET) and/or polybutylene terephtalate (PBT). Suitable polyesters include the group of polycarbonates, and if desired mixtures of polycarbonates and, for instance, PET and/or PBT.

The polyamide masterbatch and/or resin composition may also comprise a mixture of two or more polyamides. The polyamide masterbatch and/or resin composition may further comprise additional resins, such as, for example, polyesters, polyolefins, ABS, acrylate/acrylonitrile/styrene/ethylene/vinyl acetate copolymers, EPDM rubber and/or other rubbers, as well as ionomers (such as Dupont Surlyn™), and/or maleic anhydride (grafted) polymers (such as Fusabond™ from Dupont). Maleic anhydride (grafted) polymers are particularly preferred.

The flame resistant polyamide and/or polyester resin composition may contain a content of between 10-60% by weight, preferably 15-50% by weight, of glass fibres. It is also possible to use other types of fibre, such as, for example, carbon fibres, aramid fibres and/or UHMWPE fibres, and/or nanotype fillers, such as nanoclays, nanotubes, and the like.

The melamine cyanurate used in the masterbatch according to the invention is an equimolar reaction product of melamine and cyanuric acid and can be obtained, for example, by mixing an aqueous cyanuric acid solution and an aqueous melamine acid solution and filtering the precipitate produced. The thus obtained melamine cyanurate is, in general, a white solid material, which may be reduced to a fine powder having a weight average particle size of 100 µm or less, which is the physical form in which melamine cyanurate is in general commercially sold. Derivatives, in which some of the hydroxyl and amino groups of the melamine cyanurate have been substituted by other substituent groups, may also be obtained by a method similar thereto. Examples of suitable derivates include melamine cyanurate, mono(β-cyanoethyl)isocyanurate, bis(β-cyano-ethyl)isocyanurate and tris(β-cyanoethyl)isocyanurate. It is to be understood that the term "melamine cyanurate" referred to in this application includes such substituted versions as well.

Preferred melamine cyanurate powders have a D₉₀ of about 40 µm, preferably about 25 µm. In the context of this application, the characteristic dimension Dₓ is defined such that x% by weight of the powder consists of particles with dimensions ≤ Dₓ. The particle dimension distribution of the melamine cyanurate powder is determined by a method known in the art, i.e. by sieving the powder with consecutive sieves with decreasing maze width.

Melamine cyanurate powders generally contain small amounts of water and/or contaminants. It is an advantage of the process according to the invention that it can accommodate these small amounts of water and/or contaminants. They need therefore not be removed prior to compounding of the masterbatch.

If appropriate, the polyamide and/or polyester resin composition and/or masterbatch according to the invention may also comprise further flame-retardants, preferably halogen-free flame-retardants. Examples of suitable flame-retardants are zinc borate, zinc phosphate, melamine sulphate and/or ammonium polyphosphate. A particularly preferred flame retardant comprises the compound obtained by reaction of melamine and/or melem with phosphoric acid. Examples of such compounds are melamine phosphate, melem phosphate, melem pyrophosphate, dimelamine pyrophosphate, dimelamine phosphate or melamine polyphosphates.

Due to the specific process according to the invention for preparing the masterbatch, the melamine cyanurate content in the polyamide or polyester resin composition may be larger than known hitherto, without affecting the other important properties mentioned above. The melamine cyanurate content in the polyamide or polyester resin composition may be between 0.5-50 parts by weight (pbw), preferably between 1-40 pbw, more preferably between 1.5-20 pbw, per 100 pbw of the polyamide or polyester resin composition. If less than 0.5 pbw of melamine cyanurate is present in the polyamide or polyester resin composition, the flame retardant effect is not sufficiently high, whereas in case its content exceeds 50 pbw a further increase in flame retardancy is no longer obtained.

The flame retardant polyamide and/or polyester resin composition of this invention is obtained by first melt kneading polyamide or polyester resin with an elevated content of melamine cyanurate according to the process of the invention, followed by melt kneading the thus obtained masterbatch with an additional amount of a polyamide or polyester resin. The flame resistant polyamide or polyester resin composition is prepared by the usual processing techniques known in the art, such as, for example, mixing the polyamide and the masterbatch in the molten state, and if appropriate with one or more other flame retardants and/or additives, in the desired weight ratios, kneading the mixture and granulating it into granules. The granules may be stored and processed into shaped articles at a later stage. Suitable mixing devices include screw machines, such as single- and twin-screw extruders, blade kneaders, and/or special kneaders, such as, for example, Buss™ and/or Brabender™ kneaders, and/or injection moulding machines.

According to the invention, customary additives, such as lubricants, dispersing agents, heat stabilizers, colorants, antistatic agents and adhesion promoters, may be added to the polyamide or polyester resin composition and masterbatch. Preferably the polyamide or polyester resin composition and masterbatch additionally comprises dispersing agents, such as, for example, stearates, phosphonates, fatty acid amides and/or aerosils.

The process according to the invention is preferably conducted such that from 0-99 pbw of the total mass of polyamide and/or polyester and from 0-99 pbw of the total mass of MeCy are fed to the apparatus through the first inlet, the remaining being fed to the apparatus through the second inlet. More preferred is a process wherein from 0-75 pbw of the total mass of polyamide and/or polyester and from 0-75 pbw of the total mass of MeCy are fed to the apparatus through the first inlet, the remaining being fed to the apparatus through the second inlet. An even more preferred process is characterised in that from 0-50 pbw of the total mass of PA and/or polyester, and from 0-50 pbw of the total mass of MeCy are fed to the apparatus through the first inlet, the remaining being fed to the apparatus through the second inlet.

By feeding an increasing amount of PA and/or polyester through the second inlet, together with the MeCy, dispersion is further improved. Moreover, applicants have observed that the void content in the masterbatch is significantly reduced, which probably has an advantageous effect on dispersibility of the melamine cyanurate powder in the polyamide or polyester resin.

It is to be understood that to carry out the process according to the invention, more than two inlets may be employed in the kneading apparatus. Additional inlets may, for instance, be used to feed the additional above-mentioned additives to the mixture. These however may also be fed through the first and second inlet, together and/or separately from the principal components PA and/or polyester, and MeCy.

According to the invention any suitable inlet known in the art may be employed. However it has advantages to feed at least the polyamide or polyester resin and/or the melamine cyanurate to the apparatus by using a top inlet with spiralling screw. Such inlets are known per se and are for instance described by Coperion.

By employing top inlets with spiralling screws, it has been observed that processing speed, i.e. the amount of MeCy powder added per unit of time, may be higher than hitherto achieved, without affecting dispersion quality.

Suitable mixing apparatus to carry out the process of the invention include all apparatus known in the art of polymer processing which is able to intimately mix the components. Preferably continuous kneaders such as single- and twin-screw extruders are used. Kneading of the components is carried out at a temperature at which the polyamide or polyester resin usually melts.

A particularly preferred continuous kneading and extruding apparatus for carrying out the process for manufacturing the masterbatch comprises a housing provided at its inner side with protrusions, which cooperate with a rotating and simultaneously axially reciprocating kneading shaft with screw flights separated by gaps. Housing and/or kneading shaft are provided with heating and/or cooling arrangement. Such an apparatus is known per se, and is for instance described in GB-979,364 and GB-1,029,601, both of which are incorporated herein by reference. During mixing and kneading in the preferred apparatus, the components are subject to changes in specific volume, for example a compaction. The conveying screw is adapted to convey the material efficiently where the material has its maximum specific volume, usually near the inlet to the housing. At other locations along the interior of the housing the efficiency of the conveying screw is preferably improved by using elements for closing some of the gaps (so-called "Stauringen"), and advantageously these elements are fitted or removed according to requirements. The housing is provided with internal projections, which preferably are accommodated by the said gaps and may be removed at locations where the gaps have been substantially closed. At the downstream end of the housing, the apparatus is usually provided with a discharge worm situated in its own housing, which may extend coaxially with the housing of the kneading screw, but preferably extends substantially perpendicular to the axis of the kneading screw housing. The discharge worm housing is provided with an end face plate with one or several die openings. The masterbatch material worked by the kneading screw is conveyed to the discharge worm, which delivers it in a more or less uniform flow through the die openings in the end face plate, where after the exiting strands of material are granulated.

Length to diameter (UD) ratios employed in the process of the invention vary according to the component materials used, the melamine cyanurate content in the masterbatch, the additives used, and the desired output rate. A preferred UD ratio is selected between 11 - 50, more preferred between 12 - 50, particularly preferred between 15-50.

A particularly preferred process according to the invention employs a granulation step comprising cutting the melt-kneaded masterbatch material immediately upon exiting the apparatus, prior to cooling it.

Although not well understood by the applicants, this technical measure apparently further improves dispersibility of the MeCy powder in the produced masterbatch. It may be that crystallisation behaviour of the MeCy and/or of the PA and/or polyester resin matrix is influenced advantageously.

A preferred granulation system to be used in the process according to the invention is hot face granulation and/or water ring granulation.

These systems are commercially available, for example from Theysohn, Coperion, Leistritz, Buss, W&P. Generally, the molten mixture exits from the mixing apparatus of extruder type through a die, which extends substantially horizontal and ends up in a substantially vertical, and usually circular, end face plate of the mixing apparatus. In the centre of the face plate is provided a rotationally driven horizontal axis, onto which a plurality of arms, provided with knifes and extending perpendicular to the axis is attached. Upon rotation of the axis, the arms with knifes rotationally 'scan' the end face plate, whereby consecutive knifes pass over the die exit and cut the hot strand, exiting from the die. In hot face granulation, one excentric die exit is provided in the end face plate, such that the knifes cut the exiting strand from above. In water ring granulation a plurality of die exits is provided in the end face plate, usually arranged along a ring around the centre. With both systems, cutting of the strand into granules takes place when still hot, which is essential for this preferred embodiment of the invention. Through the centrifugal action of the knifes, the thus formed granules are flung onto a conical surface onto which a stream of water is running. Cooling of the granules is thus effected by a combination of air and water cooling.

A polyamide and/or polyester resin composition, based on the masterbatch according to the invention exhibits burning class V-0 according to UL (Underwriter Laboratories) 94. The composition moreover exhibits highly intumescent properties. The mechanical properties of the polyamide and/or polyester resin compositions obtained by melt-mixing with the masterbatch of the invention are improved with respect to the properties of the known flame retardant polyamide and/or polyester resin compositions, when compared on the basis of similar flame retardancy.

The polyamide and/or polyester resin compositions treated with the flame retardant masterbatch according to the invention are therefore suitable, for example, for the production of shaped articles which are employed in the electrical, electronics, automotive and general industry. The shaped articles formed by the compositions moreover show an improved surface appearance.

The dispersion of the MeCy particles in the masterbatch and the ensuing resin composition, obtained according to the method of the invention, is excellent. A suitable measure for the degree of dispersion in the masterbatch and/or the resin composition is obtained by measuring the pressure built up over time, when extruding the masterbatch or resin composition in a Brabender single screw extruder over a 100 *µ*m sieve. The masterbatch obtainable according to the method of the invention shows a pressure built up per hour of less then 400%, preferably less then 300%, more preferably less then 200%.

The present invention will now be described in more detail with reference to the following example, without however being restricted to the examples given.

### EXAMPLE AND COMPARATIVE EXPERIMENTS

In the Example and Comparative Experiments described below, the following materials have been used:
- Nylon 6: Akulon™ from DSM (injection moulding grade);
- Melamine Cyanurate powder MC50, manufactured by Ciba Specialty Chemicals, with a D₉₀ = 22 µm;
- Maleic anhydride grafted polymer, Fusabond™ from Dupont

### COMPARATIVE EXPERIMENT A

### Production of a melamine cyanurate masterbatch based on a polyamide resin by using strand granulation.

Nylon 6 was melt kneaded in a 27 mm twin screw extruder (manufactured by Leistritz) at a temperature, ranging from 255°C to 245°C. Melamine cyanurate powder (MeCy) was side fed to the twin screw extruder to yield masterbatch pellets with a MeCy content of about 50% by weight. The pellets were then strand granulated, i.e. the strand, exiting from the extruder die, was led into a water basin to cool it down, where after the cooled strand was cut into granules (granulated).

During this comparative experiment A, it turned out to be impossible to produce a masterbatch with the above mentioned high amount of MeCy. Problems arose during strand granulation with frequent breakage of the strand. This is indicative of poor to insufficient dispersion of the MeCy particles in the PA resin.

### COMPARATIVE EXPERIMENT B

### Production of a melamine cyanurate masterbatch based on a modified polyamide resin by using strand granulation.

The same experiment as in Comparative Experiment A was conducted, however about 75 % of the total weight of PA6 was replaced by a maleic anhydride grafted polymer (Fusabond™ from Dupont).

This time it turned out to be possible to obtain a strand with sufficient strength in order to produce pellets.

From the thus obtained masterbatch pellets, a flame retardant compound was produced on an single screw extruder from Axon. The compound contained about 24% by weight of masterbatch, relative to the total weight of the compound.

UL94 test specimens were injection moulded on a 2.1 metric ton Battenfeld injection moulding machine under standard conditions. Flammability properties were measured on a set of test specimens, according to UL94. The results are given in Table 1.

### EXAMPLE

### Production of a melamine cyanurate masterbatch based on a polyamide resin according to the invention.

Nylon 6 was melt kneaded in a 27 mm twin screw extruder (manufactured by Leistritz) at a temperature, ranging from 255°C to 245°C. Melamine cyanurate powder (MeCy) and the Nylon 6 were fed to the twin screw extruder according to the invention, and then granulated with a Coperion water ring granulation system. In this manner, Mastertek™ 374116 masterbatch pellets with a MeCy content of about 50% by weight were obtained.

From the thus obtained masterbatch pellets, a flame retardant compound was produced on an single screw extruder from Axon. The compound contained about 24% by weight of masterbatch, relative to the total weight of the compound.

UL94 test specimens were again injection moulded on a 2.1 metric ton Battenfeld injection moulding machine under standard conditions. Flammability properties were measured on a set of test specimens, according to UL94. The results are given in Table 1.

**Table 1: Flammability rating, according to UL94**

| | **Test specimen** | **UL94 rating** |
|---|---|---|
| **Example** | Compound with 24% Mastertek 374116 | V0 |
| **Comparative Experiment A** | Compound with 24% Fusabond based masterbatch | V2 |
| **Comparative Experiment B** | No suitable masterbatch could be obtained | **-** |

## Claims

1. Process for manufacturing a flame retarding masterbatch comprising a polyamide ( PA) and/or polyester resin and a melamine cyanurate (MeCy), comprising the steps of feeding at least a polyamide and/or polyester resin and a melamine cyanurate to a suitable continuous kneading and extruding apparatus, melt-kneading the masterbatch components in the apparatus, and granulating the melt-kneaded masterbatch material, **characterised in that**, feeding of the components to the apparatus is performed by at least a first inlet and a second inlet, positioned downstream from the first, whereby from 0-100 pbw of the total mass of PA and/or polyester and from 0-100 pbw of the total mass of MeCy are fed to the apparatus through the first inlet, the remaining being fed to the apparatus through the second inlet.

2. Process according to claim 1, **characterised in that**, from 0-75 pbw of the total mass of PA and/or polyester and from 0-75 pbw of the total mass of MeCy are fed to the apparatus through the first inlet, the remaining being fed to the apparatus through the second inlet.

3. Process according to claim 2, **characterised in that**, from 0-50 pbw of the total mass of PA and/or polyester and from 0-50 pbw of the total mass of MeCy are fed to the apparatus through the first inlet, the remaining being fed to the apparatus through the second inlet.

4. Process according to claim 3, **characterised in that**, feeding of at least the polyamide and/or polyester resin, and/or the melamine cyanurate to the apparatus is performed by using a top inlet with spiralling screw.

5. Process according to any one of the preceding claims, **characterised in that**, the granulation step comprises cutting the melt-kneaded masterbatch material immediately upon exiting the apparatus, prior to cooling it.

6. Process according to claim 5, **characterised in that**, granulation is performed by hot face granulation and/or water ring granulation.

7. Process according to any one of the preceding claims,
**characterised in that**, the continuous kneading and extruding apparatus comprises a housing provided at its inner side with protrusions, which cooperate with a rotating and simultaneously axially reciprocating kneading shaft with screw flights.

8. Process according to any one of the preceding claims, **characterised in that**, from 10-60 % by weight with respect to the total mass of the masterbatch of melamine cyanurate is fed to the extruder.

9. Process for manufacturing a flame resistant polyamide or polyester resin composition which comprises melt-kneading from 1-45% by weight of the masterbatch obtained by the process according to any one of claims 1 - 8, with a polyamide and/or polyester resin into the composition.

10. Process for manufacturing a flame resistant polyamide and/or polyester resin composition which comprises melt-kneading from 1-30% by weight of the masterbatch obtained by the process according to any one of claims 1 - 8, with a polyamide and/or polyester resin into the composition.

11. Product, directly obtained from the masterbatch, obtainable by a process according to any one of claims 1 - 8, having a degree of dispersion measured by the pressure built up over a 100 µm sieve by a Brabender single screw, of maximally 400% pressure built up/hour.
